# EUROPEAN PATENT SPECIFICATION

(11) **EP 1 843 964 B1**
(45) Date of publication and mention of the grant of the patent: **09.11.2011**
(21) Application number: 06701029.8
(22) Date of filing: 19.01.2006
(51) Int. Cl.: B66C 1/42, F03D 1/00

(54) **LIFTING DEVICE FOR A WIND TURBINE GENERATOR**
HUBVORRICHTUNG FÜR EINEN WINDTURBINENGENERATOR
DISPOSITIF DE LEVAGE POUR GENERATRICE EOLIENNE

(30) Priority: 19.01.2005 DK 200500092
(43) Date of publication of application: 17.10.2007
(73) Proprietor: A2Sea A/S, 7000 Fredericia (DK)
(72) Inventor: THOMSEN, Kurt, Elith, DK-8270 Højbjerg (DK)
(74) Representative: Tellefsen, Jens J.
(86) International application number: PCT/DK2006/000030
(87) International publication number: WO 2006/076920

(56) References cited:
- WO-A-99/16695
- WO-A-99/43956
- WO-A-03/100249

## Description

### Fiend of the Invention

The present invention relates to erecting tall heavy objects like wind turbine generators, which on remote places like on sea are complicated to assemble. The invention deals with picking a complete wind turbine generator and placing it on its foundation in one operation. Especially the invention concerns a lifting device for a wind turbine generator.

### Background of the Invention

Wind turbine generators, in common language windmills, are getting larger and large. Prior they were a handy supplement to other sources of electric energy, then they turned to a non neglectable source of environmentally acceptable power and today the wind farms to be erected consist of a number of wind turbine generators each with capacity of supplying an amount of energy per hour corresponding to the annual consumption of an ordinary house hold.

In this text, the term WTG will be used for windmill, wind turbine generator and similar power generating device. At present WTGs produce electrical power of either alternating current (AC) in one or multiple phases and with a fixed or variable frequency or direct current (DC). In the future WTGs may produce other kinds of energy, like hydrogen, that may be storable.

WO 96/05391 discloses a crane adapted for the erection of elongated bodies, preferably wind turbines, the crane is attached to the same foundation, which is used for the wind turbine. The crane comprises a jib, which may be displaced forwards and backwards. The cap and the blades of the wind turbine are thereby hoisted to the top of the wind turbine tower once this has been erected. The crane is mounted on the same foundation, which serves as foundation for the wind turbine once that has been erected. Bearing pedestals for seating the jib and anchoring straps for the attachment of double acting lifting and lowering devices are connected to the foundation, this foundation being additionally provided with an anchoring base for the wind turbine tower. The crane is of particular advantage for the erection of wind turbines in regions where it is difficult and costly to bring in a mobile crane for the erection of tall wind turbines or in case it is difficult to use a stationary crane in view of the anchoring and the support required for such cranes. Floating or wheeled mobile cranes need a large counterweight while stationary cranes according to the prior art require a solid anchoring at a great distance from the wind turbine foundation and put great demands to the steadiness of the support.

WO 01/23252 discloses a vessel, preferably a ship, for transport and mounting of structures, said vessel comprising a hull and at least four vertically elevational support legs as well as displacement means for elevating the support legs. The support legs are mounted in at least two consoles, which by first means are connected to the hull's right and left long side, respectively, and where the vessel also comprises at least one auxiliary structure, preferably a crane, for handling and placing the structures below the waterline. The result is a vessel which based on an existing vessel, i.e. complete with all gear, makes it possible to transport windmills and mount these mills on previously built structures on the seabed, and where the windmill erection it self will take place under the same conditions on land, and where the mounting may take place via cargo ships of the self-supplying type. The ship is in other words a unit which can handle of all tasks comprising loading of the mill units, transport of several mill units to the mounting site, including lifting thereof from the cargo ship and lowering thereof to the preinstalled base on the seabed.

From EP 1 058 787 is known a system for placing an entire wind turbine including a foundation. The patent does not disclose any details relating to how the wind turbine is lifted from the barge to the sea bottom. The wind turbine is lifted by attaching the crane to a point above the point of gravity on the wind turbine, for example an eyelet in the nacelle or an upper part of the tower. No indications are made as to the actual engagement means. From the central position of the crane wire it must be assumed that when lifting in an upper part of the tower, this must be carried out by attaching the lifting means to some means arranged inside the tower.

Furthermore, it is commonly known to use clamping devices at the bottom of the tower for moving at least the bottom part of the tower in either erected or horizontal position. Another technical solution is to lift at the top of the part of the tower eventually in connection with a yoke bolted to the top flange of the tower. Both these solutions may work on part of a WTG but a complete WTG may either have too high a centre of gravity or no access to centre of the top of the part of the tower.

Prior attempts have been made to lift a WTG tower at the bottom flange. This is not a proper solution as the bottom flange may not be disorted as the WTG, when it is put on the foundation, has to mate properly on this bottom flange. On the other hand, on the top of the tower, the yawing gear is usually positioned as the upper part of the tower, but the invention attaches the tower below the yawing gear. The bottom flange cannot be made stronger or other measures to be taken to make it possible to use the bottom flange for lifting. Furthermore, as the tower usually is slightly conical (6° - 8°) a fatal lift near the bottom flange will make it impossible for the jaws to hold the tower.

An arrangement according to the preamble is known from WO 99/16695.

### Object of the Invention

The object of the invention is to provide a lifting device for tall industrial installations like a wind turbine generator (WTG), where the WTG-manufacturer or builder can assemble, test and prepare the WTG on shore or an industrial site with suitable facilities. After the assembly, the complete WTG can be transported to the foundation and connected to utility.

### Description of the Invention

The object of the invention is achieved by a listing arrangement according to claim 1 and a method according to claim 9. A lifting device for a wind turbine generator according to the invention comprises a yoke defining the connection between tower of the wind turbine generator and a crane, where the yoke interacts with the tower and in the lifting position lifts a complete wind turbine generator in connection with erection or service. By attaching the yoke, defining the connection between the tower and the crane at a point sufficiently high on a tall installation a stable lift can be performed. Although a complete wind turbine generator is a large and heavy lift an attaching point below the nacelle will be sufficiently close to centre of gravity without disturbing the contents of the nacelle. The possibility of avoid disturbing the contents of the nacelle means that even the nacelle can be fully assembled and ready for action. All the fitting and testing can be performed on shore in advance. Hence, it is possible to move a WTG from shore to the foundation on sea. After the lift is performed and the WTG is secured to the foundation, the yoke can be removed. Although the lifting device is intended to use under erection or service it may as well be used during updating, repairing or dismantling of the WTG.

According to the invention, the yoke can be suspended by the crane attached to the yoke above the nacelle of the wind turbine generator, and the yoke can interact with the tower below the nacelle. By this arrangement, all the mayor unbalanced components will be positioned below the hook or attachment point of the wire of the crane. The WTG rotor is balanced and the blade position will have no influence on a stable lift.

It is advantageous that in connection with a complete wind turbine generator of the type horizontal axis wind turbine type (HAWT) under the final transportation includes tower, fully equipped nacelle and preferably blades. Then no fitting or preparation is needed on sea.

If the yoke in the lifting position surrounds the nacelle no components within the nacelle will have to be removed during lifting. Hence, it is possible to transport a complete WTG to an offshore foundation.

To make a precise lift of a fully equipped WTG possible the yoke will have to interact with one or more projection or indentation at the tower. This projection or indentation may due to symmetry be circumferential in one or more segments and positioned in the upper half of the tower, preferably in the upper tenth of the tower, and most preferably just below the nacelle. By this way, a stable lift can be conducted.

From a production point of view the yoke may interact with a combination of projections and indentations welded to the upper part of the tower, preferably a single projection welded to the top of the tower. Then yoke, tower and nacelle with blades is made a simple and complete lift from the constructor's point of view as all components, weight and their position is known.

Furthermore, it has shown advantageous that the yoke may interact with a collar in one or more segments, preferably a single circumferential collar in the upper part of the tower, preferably just below the nacelle.

To make the yoke surround the nacelle without interfering with parts inside the nacelle the yoke may be formed as an H-shaped frame, where the frame is the base for two adjustable sets of vertical profiles. The two sets of vertical profiles are then equipped with half circle-shaped jaws, the jaws are preferably a set of adjustable, lockable jaws, designed to interact with the collar on the tower. By this arrangement, the complete WTG may be grabbed controlled and lifted.

To avoid or at least reduce the possibility for the loosing the grip of the complete WTG the adjustable, lockable set of jaws may be adjustable axially according to the tower and lockable when the jaws interact with the collar. The lock of the jaws may be controlled together with the crane. This means that when the yoke is attached to the tower it may not be released unintentionally.

Furthermore, it has shown advantageous that attachment point for the crane at the yoke can be positionally controlled together with the crane to position the lifting point according to the wind turbine generators centre of gravity. The H-shaped frame may be equipped with servomotors controlled together with the crane to move the lifting point in a horizontal plane, so that the lifting point can be positioned within a square of 500 times 500 mm. It may in this way be necessary to compensate for minor unbalances as when mating the foundation with the bottom of the tower a precise fit is necessary independently of welding or bolts to be used as securing means. Servomotors, hydraulic pistons or similar linear motors may be adapted in the lifting yoke to move the attachment point relative to centre of gravity of the complete WTG to make the centre of the tower vertical even under the release of the lift.

### Description of the Drawing

The invention is explained in details below referring to the drawing, where
- fig. 1: shows a WTG suspended by a crane positioned on a vessel, and
- fig. 2: shows details of the yoke surrounding the nacelle.

### Detailed Description of the Invention

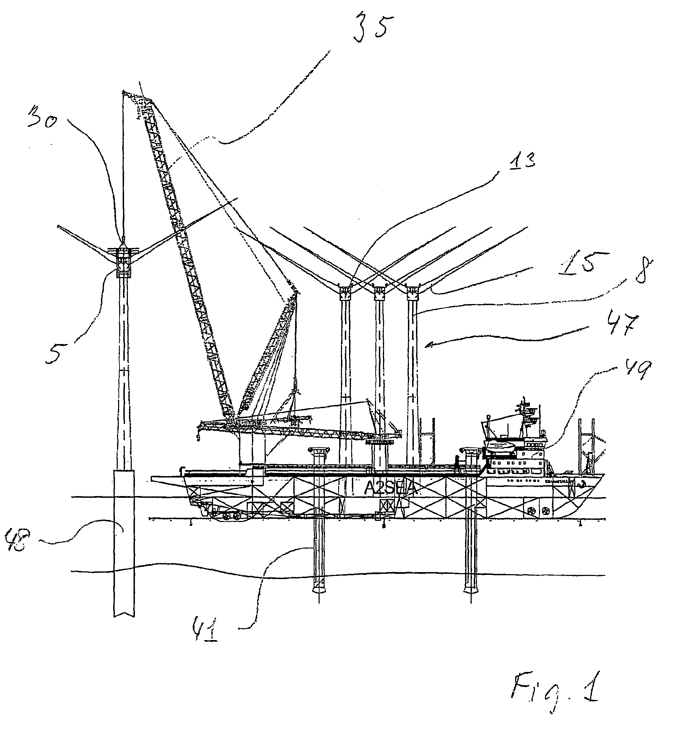

For erecting wind turbine generators (WTG) on an offshore site some kind of vessel is needed for transporting equipment from shore to the site. In fig. 1, a vessel 49 is shown where a number of WTGs 47 are placed onboard. These WTGs 47 are fully equipped with tower 8, nacelle 13 and blades 15 ready to be mounted on a foundation 48 (only one is shown). According to the invention, a complete and ready WTG 47 can be lifted from the vessel 49 to the foundation 48 in a single lift by a crane 35.

The vessel 49 on fig. 1 is during the lift jacked up by at least flour vertical elevational support legs 41. These support legs 41 eliminate the influence of waves from the sea. It may be possible to control the position of the vessel through thrusters, but as the WTG foundation 48 is fixed to the ground, support legs 41 is a proper solution.

The reference number 9 is used for the single and specific WTG in the lift. The reference number 47 is used for WTGs in general.

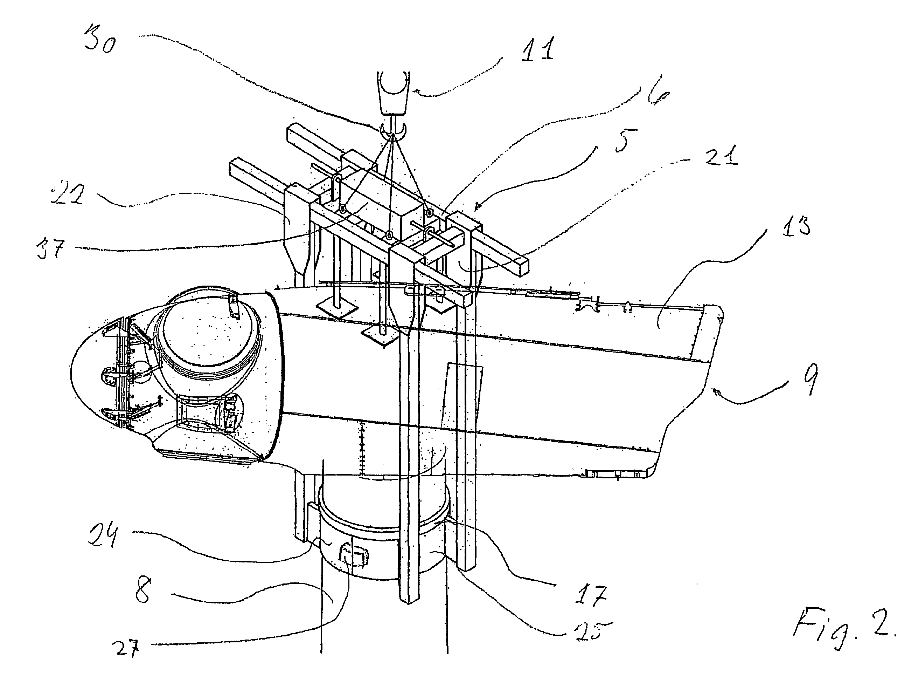

In fig. 2, the lifting device according to the invention is shown. This lifting device basically consists of a yoke 5 connecting the hook of the crane 11 with a collar 17 on the tower 8 of a WTG 9. The yoke 5 surrounds the nacelle 13.

The yoke 5 is constructed with the aim to lift and move a complete WTG 9 with tower 8, nacelle 13 and blades 15. This movement can be carried out on shore before transporting the WTG 47 to sea. Further on, a similar lift can be carried out from the vessel 49 to the foundation 48.

The reason for the WTG 47 to be assembled on shore is actually that WTGs 47 used offshore today are rather large. Most of the components are complicated to transport on sea or on road as partly assembled WTGs. As an example, the tower 8 can be transported on the road usually in three sections. The nacelle 13 as an assembled component is too large and too heavy for road transportation. The blades 15 are not too heavy but they are long and vulnerable. All these components will have to be put together and tested before the WTG 47 is put in operation. Consequently, a 2-megawatt wind turbine excluding the foundation 48 will need more than 40 lorries of equipment in order to be assembled before the WTG 47 can be erected on sea. On the other hand, it is not impossible to lift the total mass of such a construction, as a WTG 47 in the 2-megawatt class weighs about 100-200 tons.

There are great advantages in assembling the whole WTG 47 on shore and test all the equipment before moving it to the sea. There are many components that are critical for the functioning of the WTG 47, and these components may be too expensive to adjust and repair on sea which is the reason for the construction of the lifting yoke 5. Usually tall and heavy objects may be transported to and from a port without problems.

In a suitable crane 35, the lifting yoke 5 can be mounted and designed to lift the WTG 9, which is attached at a predetermined point near the top of the tower 8 and below the nacelle 13. By lifting the WTG 9 at the top of the tower 8, it will be conveniently close to the centre of gravity that will make the lift of the WTG 9 a stable but heavy lift. Furthermore, the lift in the top of the tower 8, especially if the attaching point for the yoke 5 is positioned outside the tower 8, will not call for any installations or equipment in the nacelle 13 to be moved or disturbed.

The lifting device is adapted to lift a complete WTG 47 from the place where it has been assembled on shore until the vessel 49, which is equipped with suitable support for transporting the WTG 47 to the site offshore. When the vessel 49 arrives at the site, a crane 35 similar to the one on shore with a lifting device is able to place the complete WTG 47 at the offshore foundation 48 as one single lift. The crane 35 may be part of the vessel 49 or be positioned on a separate vessel. A similar crane may be used on shore. The lifting device for the specific WTG may be the same used for all the lifting or there may be a number of equally designed devices used on different locations.

The lifting device includes a yoke 5 formed as an H-shaped frame 6. The frame 6 is the base for two adjustable set of vertical profiles 21, 22 that can be moved horizontally such that the profiles 21, 22 can be lowered down over the nacelle 13 even when the nacelle 13 is mounted on the tower 8.

Each of the two sets of vertical profiles 21, 22 is equipped with half circle-shaped jaws 24, 25 with a form suitable for an individual WTG 9 tower 8 type. The jaws 24, 25 can easily be changed from project to project. Usually all the WTGs for a specific project are of the same type and dimension. In case of service on a specific site, a number of different types may be present and this calls for different sets of jaws 24, 25 and maybe different yokes 5 with vertical profiles 21, 22.

The half circle-shaped jaws 24, 25 are equipped with locking bolts 27 that are controlled externally for securing the half circle-shaped jaws 24, 25 so that they will not open when lifting the WTG 9.

The half circle-shaped jaws 24, 25 are connected to the profiles 21, 22 with a quick-release system secured in an appropriate manner.

At the top of the WTG 9 tower 8 below the nacelle 13 there has been provided a collar 17. This collar 17 has been provided on a predetermined space of the WTG 9 tower 8 suitably below the nacelle 13 and as close to the nacelle 13 as possible due to the centre of gravity of the assembled WTG 9. This collar 17 is shaped so that the two half circle-shaped jaws 24, 25 can mate underneath this collar 17. This actually means that the collar 17 will have to carry the complete load of the lift. The collar 17 is part of the tower 8. It can be procured as a welded construction in the top end of the WTG 9 tower 8.

Basic dimensions of the collar 17 could be 100 mm X 100 mm. This is a square cross-section. A rectangular cross-section can be used. Even a non-regular cross-section can be used to enhance the grip between the jaws 24, 25 and the collar 17. On the other hand, the cross-section has to be simple if the jaws 24, 25 and their function have to be checked remote. Furthermore, the cross-section may not introduce a limitation on which direction the jaws 24, 25 will have to attach the collar 17 or the number of segments of the jaws.

Basically the collar 17 and the jaws 24, 25 can be segmented but due to the weight of the lift, the force and the importance of this attaching point a complete circular collar 17 is prefen-ed. Furthermore, the collar 17 is a full welded or part of the tower. As the tower 8 is usually constructed of rolled or bended steel plates all known methods of attaching the collar 17 will be included. The jaws 24, 25 can equally be segmented but as they will have to be put on and removed afterwards at least two halves will be necessary. Three thirds or four quarters may be usable. Even a complete circle may be used but it will have to be severed or split after use. Some insertions between the collar 17 and jaws 24, 25 may be needed as well as the surface coating or paint will have to be restored after the lift.

In one preferred mode, the lifting yoke 5 is mounted in the crane hook or attachment point 30 in the assembly crane 35 that is positioned on board the vessel 49. Suitable electric or hydraulic installations e.g. servomotors 37 are carried out to adjust the profiles 21, 22 to and the jaws 24, 25 according to the WTG 9 tower 8 and to the H-shaped frame 6 or the yoke 5. The lifting yoke 5 is positioned over the centre of the WTG 9 tower 8 with the jaws 24, 25 moved as much as possible away from each other. Then the lifting yoke 5 is lowered down over the nacelle 13 and the tower 8 until the two half circle-shaped jaws 24, 25 reach underneath the collar 17 on the tower 8. Then half circle-shaped jaws 24, 25 are moved in underneath the collar 17. When the lifting yoke 5. is in the correct position, the profiles 21, 22 are moved in so that the half circle-shaped jaws 24, 25 meet to make a complete circle around the WTG 9 tower 8 underneath the collar 17. The jaws 24, 25 are then locked electrically or hydraulically with locking bolts 27 so that the complete full-circle jaws 24, 25 enclose or supports the collar 17. Then the WTG 9 including tower 8. nacelle 13 and blades 1 S can be lifted by the crane 35 from shore till the deck of the vessel 49 and then further on to the foundation 48.

To ensure that the WTG 47 is suspended vertically above the centre of gravity, at least two of the attachment points on the H-shaped frame 6 or yoke 5 is positioned in front of the tower 8 and are made adjustable so that the tower will be vertical when suspended. Actually, the centre of gravity of an HAWT with three blades 15 is placed upwind. The term HAWT means a horizontal axis wind turbine. The centre mass of a three-blade HAWT is positioned a little more to the front than the centre of the yawing gear where front is defined by the three-blade rotor. By adjusting the two front lifting points in the H-shaped frame 6 or yoke 5 against the rotor it is possible to lift the complete WTG 47 with a vertical tower 8.

When the yoke 5 has been locked 27 and the WTG 9 together with the yoke 5 is in balance, the WTG 9 can be moved vertically from one position to another. The correct lifting point is calculated as a function of a specific tension in the two front lining points or front straps on the yoke 5. The front straps are positioned near the front of the nacelle 13 closest to the rotor with the blades 15.

The attachment point 30 for the crane 35 at the yoke 5 can be positionally controlled together with the crane 35 to position the lifting point according to the wind turbine generators centre of gravity. This control can be conducted through electronics or optical means with the aim to position the part of the WTG at the needed position. Usually the critical position is the bottom of the tower 8 especially when the WTG mates with the foundation 48. The H-shaped frame 6 is equipped with servomotors 37 controlled together with the crane 35 to move the lifting point in a horizontal plane, so that the lifting point can be positioned within a square of 500 times 500 mm. The size of the horizontal plane is not critical, as the lift will have to be well prepared. The servomotors 37 can be electrical or hydraulic and the can be externally controlled from the crane 35 or a control room for the operation.

The invention is not limited to the abovementioned best mode but may be modified by a man skilled in the art within the scope of the appended claims.

## Claims

1. Lifting arrangement comprising a lifting device comprising a yoke (5) attached to a crane (35) **characterised in that** a collar (17) is attached to a wind turbine generator, the yoke (5) is formed as an H-shape frame (6), where the frame (6) is the base for two adjustable sets of vertical profiles (21, 22), the two sets of vertical profiles (21, 22) are equipped with half circle-shaped jaws (24, 25), the jaws (24, 25) are preferably a set of adjustable, lockable (27) jaws (24, 25), designed to interact with the collar (17) attached to the tower (8)

2. Lifting arrangement for a wind turbine generator according to claims 1 **characterised in that**, the complete wind turbine generator (9) is a horizontal axis wind turbine including lower (8), fully equipped nacelle (13) and preferably blades (15).

3. Lifting arrangement for a wind turbine generator according to claims 1 - 3 **characterised in that**, the yoke (5) in the lifting position surrounds the nacelle (13).

4. Lifting arrangement for a wind turbine generator according to claims 1 - 3 **characterised in that**, the yoke (5) interacts with the collar 17, where the collar 17 is one or more projection(s) (17) or indentation(s) at the tower (8), which projection(s) (17) or indentation(s) is/are circumferential in one or more segments, and which projection(s) (17) or indentation(s) is/are positioned in the upper half of the tower (8), preferably in the upper tenth of the tower (8), and most preferably just below the nacelle (13).

5. Lifting arrangement for a wind turbine generator according to claims 1-4 **characterised in that**, the yoke (5) interacts with a combination of projections (17) and indentations welded to the upper part of the tower (8), preferably a single projection (17) welded to the top of the tower (8).

6. Lifting arrangement for a wind turbine generator according to claims 1 - 5 **characterised in that**, the yoke (5) interacts with a collar (17) in one or more segments, preferably a single circumferential collar (17) in the upper part of the tower (8), preferably just below the nacelle (13).

7. Lifting arrangement for a wind turbine generator according to claims 1 - 7 **characterised in that**, the adjustable, lockable (27) set of jaws (24, 25) are adjustable axially according to the tower (8) and lockable (27) when the jaws (24, 25) interact with the collar (17), the lock (27) of the jaws (24, 25) is controlled together with the crane (35).

8. Lifting arrangement for a wind turbine generator according to claims 1 - 7 **characterised in that**, attachment point (30) for the crane (35) at the yoke (5) can be positionally controlled together with the crane (35) to position the lifting point according to the wind turbine generators centre of gravity, and that the H-slsape frame (6) is equipped with servomotors (37) controlled together with the crane (35) to move the lifting point in a horizontal plane, so that the lifting point can be positioned within a square of 500 times 500 mm.

9. Method of lifting a wind turbine generator with a crane (35) wherein the wind turbine generator (9) comprises a tower structure (8) on top of which a nacelle (13) is arranged, where a collar (17) is fastened around an upper part of the tower (8), where the means for lifting the wind turbine generator has a lifting yoke (5), comprising a H-shaped frame (6) onto which frame (6) two sets of profiles (21, 22) are adjustable mounted, where said profiles extends downwardly from said frame (6), and at the lower end is provided with jaws (24, 25), where the yoke (5) is lowered over the wind turbine generator (9) such that the jaws (24, 25) are positioned under the collar; then the profiles (21,22) are moved relative to the H-frame (6), whereby the jaws (24,25) engage the tower (8), after which the crane is activated, whereby the jaws (24, 25) engage the collar (17) and thereby lifts the wind turbine generator (9).

## Patentansprüche

1. Hubanlage umfassend eine Hubvorrichtung mit einem zu einem Kran (35) befestigten Joch (5), **dadurch gekennzeichnet, daß** der Windturbinengenerator einen Wulst (17) aufweist, und das Joch (5) als ein H-förmiges Gestell (6) gestaltet ist, wobei das Gestell (6) die Basis zweier verstellbaren und mit halbkreisförmigen Backen (24, 25) versehenen, senkrechten Profilsätze (21, 22) bildet, wobei die Backen (24, 25) vorzugsweise ein Satz von verstellbaren, verschließbaren (27) und zur Wechselwirkung mit dem am Turm (8) befestigten Wulst (17) vorgesehenen Backen sind.

2. Hubanlage für einen Windturbinengenerator nach Anspruch 1, **dadurch gekennzeichnet, daß** der ganze Windturbinengenerator (9) eine Turbine mit waagerechter Achse ist und einen Turm (8), ein voll ausgerüstetes Gehäuse (13) und vorzugsweise Rotorblätter (15) umfaßt.

3. Hubanlage für einen Generator einer Windturbine nach Anspruch 1-3, **dadurch gekennzeichnet, daß** das Joch (5) in seiner Hubstellung das Gehäuse (13) umschließt.

4. Hubanlage für einen Windturbinengenerator nach Anspruch 1-3, **dadurch gekennzeichnet, daß** das Joch (5) mit dem Wulst (17) in Wechselwirkung steht, wobei der Wulst (17) ein/eine oder mehrere, in einem oder mehreren Kreisabschnitt/en umlaufender/umlaufenden Vorsprung/Vorsprünge oder Einkerbung/en am Turm (8) ist, und der Vorsprung/die Vorsprünge (17) oder Einkerbung/en in der oberen Hälfte des Turms (8) angeordnet ist/sind, vorzugsweise im oberen Zehntel des Turms (8) und am meisten bevorzugt gerade unterhalb des Gehäuses (13).

5. Hubanlage für einen Windturbinengenerator nach Anspruch 1-4, **dadurch gekennzeichnet, daß** das Joch (5) mit einer Kombination von Vorsprüngen (17) und Vertiefungen in Wechselwirkung steht, die mit dem oberen Teil des Turms (8) verschweißt sind, vorzugsweise mit einem einzelnen, mit der Spitze des Turms (9) verschweißten Vorsprung (17).

6. Hubanlage für einen Windturbinengenerator nach Anspruch 1-5, **dadurch gekennzeichnet, daß** das Joch (5) mit einem Wulst (17) in einem oder mehreren Kreisabschnitten in Wechselwirkung steht, vorzugsweise mit einem einzelnen peripheren Wulst (17) im oberen Turmteil (8), vorzugsweise gerade unterhalb des Gehäuses (13).

7. Hubanlage für einen Winddturbinengenerator nach Anspruch 1-7, **dadurch gekennzeichnet, daß** der verstellbare, verschließbare (17) Satz von Backen (24, 25) gemäß dem Turm (8) achsial verstellbar ist, sowie auch verschließbar, wenn die Backen (24, 25) mit dem Wulst (17) in Wechselwirkung stehen, wobei der Verschluß (27) der Backen (24, 25) gemeinsam mit dem Kran (35) gesteuert wird.

8. Hubanlage für einen Windturbinengenerator nach Ansprüchen 1-7, **dadurch gekennzeichnet, daß** der Befestigungspunkt (30) des Krans (35) am Joch (5) gemeinsam mit dem Kran (35) stellungsmäßig steuerbar ist zum Aufbringen des Hubpunktes gemäß des Schwerpunktes der Windturbine, und daß das H-förmige Gestell (6) Stellmotoren (37) aufweist, die gemeinsam mit dem Kran (35) steuerbar sind zum Verschieben des Hubpunktes in einer waagerechten Ebene, so daß der Hubpunkt innerhalb eines Quadrats von 500 x 500 mm unterbringbar ist.

9. Verfahren zum Heben von einem Windturbinengenerator mit einem Kran (35), wobei der Windturbinengenerator (9) eine Turmkonstruktion (8) aufweist, auf deren Spitze ein Gehäuse (13) angeordnet ist, wobei ein Wulst (17) um einen oberen Teil des Turms (8) befestigt ist, wobei die Mittel zum Heben vom Windturbinengenerator ein Hebejoch (5) mit einem H-förmigen Gestell (6) aufweisen, auf dem zwei Profilsätze (21, 22) verstellbar angeordnet sind, wobei sich die Profile nach unten vom Gestell (6) erstrecken und am unteren Ende mit Backen (24, 25) versehen sind, wobei das Joch (5) über den Windturbinengenerator (9) gesenkt wird, so daß die Backen (24, 25) unterhalb des Wulstes anliegen; danach werden die Profile (21, 22) im Verhältnis zum H-Gestell (6) verschoben, wobei die Backen (24, 25) mit dem Turm (8) eingreifen, wonach der Kran betätigt wird und die Backen (24, 25) mit dem Wulst (17) eingreifen und somit den Windturbinengenerator (9) hochheben.

## Revendications

1. Installation the levage comprenant un dispositif de levage comportant une portique (5) attachée à une grue (35), **caractérisée en ce qu'**un manchon (17) est attaché à une génératrice éolienne, la portique (5) est formée comme un cadre en forme de H (6), où le cadre (6) constitue la base de deux ensembles réglables de profilés verticaux (21, 22), les deux ensembles de profilés verticaux (21, 22) sont equipés de mâchoires demi-circulaires (24, 25), les mâchoires (24, 25) sont de préférence un ensemble de mâchoires (24, 25) verrouillables et réglables (27) désignées à interagir avec le manchon (17) attaché à la tour (8).

2. Installation de levage pour génératrice éolienne selon la revendication 1, **caractérisée en ce que** l'entière génératrice éolienne (9) est une génératrice éolienne à axe horizontal comprenant une tour (8), une nacelle tout équipée (13) et de préférence des pales (15).

3. Installation de levage pour génératrice éolienne selon les revendications 1 - 3, **caractérisée en ce que** la portique (5) dans sa position levée entoure la nacelle (13).

4. Installation de levage pour génératrice éolienne selon les revendications 1 - 3, **caractérisée en ce que** la portique (5) interagit avec le manchon 17, où le manchon 17 constitue une ou plusieurs saillie(s) (17) ou échancrure(s) sur la tour (8), laquelle/lesquelles saillie(s) (17) ou échancrure(s) est/sont circonférentielle(s) dans un ou plusieurs segments, et laquelle/lesquelles saillie(s) (17) ou échancrure(s) est/sont positionnée(s) sur la moitié du haut de la tour (8), de préférence dans le dixième du haut de la tour (8), et plus préférentiellement juste en dessous de la nacelle (13).

5. Installation de levage pour génératrice éolienne selon les revendications 1 - 4, **caractérisée en ce que** la portique (5) interagit avec une combinaison de saillies (17) et d'échancrures soudées à la partie supérieure de la tour (8), de préférence une seule saillie soudée à la section supérieure de la tour (8).

6. Installation de levage pour génératrice éolienne selon les revendications 1 - 5, **caractérisée en ce que** la portique (5) interagit avec un manchon (17) dans un ou plusieurs segments, préférentiellement un seul manchon circonférentiel (17) dans la partie supérieure de la tour (8), de préférence juste en dessous de la nacelle (13).

7. Installation de levage pour génératrice éolienne selon les revendications 1 - 7, **caractérisée en ce que** l'ensemble verrouillable et réglable (27) de mâchoires (24, 25) est réglable axialement selon la tour (8) et verrouillable (27) lorsque les mâchoires (24, 25) interagissent avec le manchon (17), le verrouillage (27) des mâchoires (24, 25) étant contrôlé avec la grue (35).

8. Installation de levage pour génératrice éolienne selon les revendications 1 - 7, **caractérisée en ce que** le point d'attache (30) de la grue (35) à la portique (5) peut être contrôlé positionellement avec la grue (35) pour positionner le point de levage selon le centre de gravité de la génératrice éolienne, et que le cadre en forme de H (6) est équipé de servomoteurs (37) contrôlés avec la grue (35) pour déplacer le point de levage dans un plan horizontal de sorte que le point de levage peut être positionné dans l'intérieur d'un carré de 500 fois 500 mm.

9. Procédé de levage d'une génératrice éolienne avec une grue (35), la génératrice éolienne comportant une structure de tour (8) sur la section supérieure de laquelle une nacelle (13) est arrangée, où un manchon (17) est fixé autour d'une partie supérieure de la tour (8), où les moyens de levage de la génératrice comportent une portique de levage (5), comprenant un cadre en forme de H (6), sur lequel cadre (6) deux ensembles de profilés (21, 22) sont montés de facon réglable, où lesdits profilés s'étendent vers le bas de la part dudit cadre (6), et sur la partie la plus basse sont munis de mâchoires (24, 25), où la portique (5) est baissée sur la génératrice éolienne (9) de sorte que les mâchoires (24, 25) sont positionnées sous le manchon ; ensuite les profilés (21, 22) sont déplacés par rapport au cadre de H (6), par quoi les mâchoires (24, 25) enclenchent la tour (8), après quoi la grue est actionnée, par quoi les mâchoires (24, 25) enclenchent le manchon (17) et par ce moyen lèvent la génératrice éolienne (9).
